(19) Europäisches Patentamt
European Patent Office
Office européen des brevets

(11) Publication number: 0 592 036 A1

# (12) EUROPEAN PATENT APPLICATION

(21) Application number: **93202807.9**

(51) Int. Cl.5: **C08K 5/06**, C08L 33/06

(22) Date of filing: **02.10.93**

(30) Priority: **05.10.92 IT MI922292**

(43) Date of publication of application: **13.04.94 Bulletin 94/15**

(84) Designated Contracting States: **BE DE ES FR GB IE IT NL PT**

(71) Applicant: **ENICHEM ELASTOMERI S.r.l.**
**16, Piazza della Repubblica**
**I-20124 Milan(IT)**

(72) Inventor: **Penco, Maurizio**
**Via Leopardi, 5**
**I-20073 Codogno (Milano)(IT)**
Inventor: **Lanzavecchia, Laura**
**Via Cadighiara, 47/3**
**I-16133 Genova(IT)**
Inventor: **Spelta, Angelo Lucio**
**Via della Molazza, 28/B**
**I-20071 Casalpusterlengo (Milano)(IT)**

(74) Representative: **De Carli, Erberto et al**
**ING. BARZANO & ZANARDO MILANO S.p.A.**
**Via Borgonuovo, 10**
**I-20121 Milano (IT)**

## (54) Use of polyoxyethylenic compounds as vulcanization co-adjuvant for chloroacrylic rubbers.

(57) Alkyl- and/or aryl-capped polyethers of polyoxyethylenic type, are used as co-adjuvant agents in the reactions of sulfur/organic soap vulcanization of chloroacrylic rubbers.

The chloroacrylic elastomer based compounds containing such polyethers display sulfur/soap vulcanization rates which are higher than as observed in the absence of the polyether compound.

EP 0 592 036 A1

The present invention relates to the use of alkyl- and/or aryl-caped polyethers of polyoxyethylenic type, as co-adjuvant agents in the reactions of sulfur/organic soap vulcanization of chloroacrylic rubbers.

The rubbers of acrylic type are an extremely interesting product range from the application viewpoint. In fact, their high resistance to organic solvents, coupled with a good thermal stability (operating temperatures comprised within the range of from -40 to 180-200 °C) render these products suitable for applications in motor vehicle sector, such as, e.g., in the manufacture of fuel delivery pipes and oil-resistant gaskets.

The acrylic rubbers generally are copolymers of acrylic or methacrylic esters copolymerized with monomers containing suitable reactive groups for yielding the subsequent vulcanization reaction. According to the reactive group contained, they may be subdivided into chloroacrylic rubbers and rubbers containing epoxy groups; also acrylic rubbers are known which contain unsaturated groups of olefinic type which, however, for the time being, did not find any interesting applications yet.

Of course, the used vulcanization process strongly depends on the chemical nature of the reactive site. The several types of acrylic rubbers and their corresponding vulcanization reactions are fully illustrated in "Designing the structure of acrylic elastomers", Kautschuk + Gummi Kunststoffe 42nd year, No. 7/89, Pages 569-476.

Among the several types of acrylic rubbers, chloroacrylic types are most widely used both owing to the uses they are destined to, and for the flexibility and vulcanization types they can be submitted to; for example, they can be vulcanized by using multifunctional reactants, such as trithiocyanuric acid, either as such, or bearing an alkylic chain in lieu of one of rubber's -SH groups; such a compound is often used in the vulcanization of compounds in association with alkaline-earth metal oxides, preferably with MgO, and the vulcanization reaction is catalyzed by the presence of compounds with polyoxyethylenic functionality ("Crosslinking of halogen-containing rubbers with triazine dithiols", Rubber Chemistry and Technology, Vol. 57, Pages 34-47. Japanese Patent JP 51111853 to Nippon Zeon).

A vulcanization method which can be applied to chloroacrylic rubber-based compounds is that method which implies the use of a sulfur-soap (fatty acid salt) vulcanizing system ("Designing the structure of acrylic elastomers", Kautschuk + Gummi Kunststoffe 42nd year, No. 7/89, pages 569-476).

However, also this method, similarly to other vulcanization methods, requires very long vulcanization times, as compared to those which are generally used in the concerned field with other rubber types (such as, e.g., polybutadiene, polyisoprene, natural rubber, and so forth); such a type of vulcanization may require times which may even be longer than 4 hours at temperatures of 150-200 °C.

Owing to the above, the strongly felt need arises for accelerating the vulcanization cycles, with a consequent increase in industrial productivity, with no appreciable changes in the properties of the resulting manufactured articles.

The present Applicant has surprisingly found now that such a drawback can be easily overcome by means of the use of a particular type of polyethers, and precisely the aryl-capped polyethers of polyoxyethylenic type which, when used in suitable amounts in compounds of chloroacrylic rubbers which contain, as the crosslinking agent, sulfur, in association with at least one alkaline salt of a fatty acid (vulcanization system of sulfur-soap type), also act as co-adjuvant and accelerator agents in the vulcanization reaction.

The use of polyethers, even of di-alkyl-capped type and not exactly of polyethoxy type, was adopted in chloroacrylic rubber compounds, to act as plasticizers. In fact, in U.S. Patent 1,384,021, the use is disclosed of alkyl-capped polyethers with a higher molecular weight than 1000, and preferably comprised within the range of 3500 to 7000, in amounts comprised within the range of form 3.5 to 7.5% by weight (7 and 15%, respectively, relatively to the elastomer), as a plastifier agent capable of yielding a substantial improvement in the processing ability of acrylic rubber based compounds containing sulfur in association with an alkaline salt of a fatty acid. However, such an improvement was accomplished to the damage of other, much more important, properties, such as elastical-mechanical properties (elastic modulus, tensile strength, set and hardness), which result to be considerably reduced.

On the contrary, when suitable amounts phenyl-capped polyethers of polyoxyethylenic type having a low enough molecular weight are used in rubber blends of chloroacrylic rubbers in the presence of sulfur and of an alkaline salt of a fatty acid (vulcanization system of sulfur-soap type), said polyethers keep unchanged the elastical-mechanical characteristics of the vulcanized manufactured articles, simultaneously showing unexpected accelerating properties for the vulcanization reaction.

In other terms, one might state that, with the elastical-mechanical characteristics of the vulcanized manufactured articles being the same, the properties as co-adjuvant agents in the reaction of vulcanization with sulfur/soap of chloroacrylic rubbers, are typical for the polyethers having the following characteristics:

(i) they are of polyoxyethylenic type;

(ii) they have a low enough molecular weight;

(iii) are of aryl-capped type.

In accordance therewith and according to a first aspect thereof, the present invention relates to the use, as accelerating agents in the vulcanization reaction of sulfur/soap type of chloroacrylic rubber-based compounds, of polyethers of polyoxyethylenic type corresponding to the following general formula

$R\text{-}O\text{-}(CH_2\text{-}CH_2\text{-}O)_nR'$ (I)

wherein

R corresponds to:
an aryl or alkylaryl group in which the alkyl substituent, which may be either linear or branched, contains from 1 to 10 carbon atoms,

R' corresponds to:
a methyl; ethyl; propyl; benzyl; or alkylbenzyl group in which the alkyl substituent is of from 1 to 10 carbon atoms; an aryl or alkylaryl group in which the alkyl substituent is of from 1 to 10 carbon atoms; a hydrogen atom,

n is an integer comprised within the range of from 1 to 10.

For the purposes of the present invention, under "aryl", as well as with reference to the aryl portion of an "alkylaryl group", a mono-, bi- or tri-cyclic aromatic moiety is referred to, which contains from 6 to 14 carbon atoms; it derives that by an "alkylaryl group", a mono-, bi- or tri-cyclic aromatic moiety is understood which bears an either linear or branched alkyl substituent.

The polyethers of polyoxyethylenic type corresponding to the general formula (I) have a lower weight molecular weight than 1000.

Illustrative, non-limitative examples of this class of compounds are:

* ethers of dodecyl-phenol with polyoxyethylene;
* esters of benzoic acid with polyoxyethylene containing from 1 to 10 oxyethylenic units;
* esters of alkylbenzoic acid with polyoxyethylene, in which the alkyl substituent contains from 1 to 10 carbon atoms;
* esters of alkylsalicylic acid with polyoxyethylene;
* esters of naphthoic acid or alkylnaphthoic acid with polyoxyethylene.

The chloroacrylic rubbers are copolymers of one or more (meth)acrylic esters, having the structural formula

$CH_2=CX$ (II)
|
COOY

with monomers containing one chlorine atom, and corresponding to the following structural formula

$CH_2=CH$ (III)
|
Z

wherein:

X may be: hydrogen or a methyl group,

Y may be: a (linear or branched) alkyl radical; methyloxyethyl; ethyloxyethyl;

Z may be: $-OOC\text{-}CH_2Cl$; $-C_6H_5\text{-}CH_2Cl$; $-OC_2H_4Cl$.

The chlorine content in said acrylic rubbers is generally comprised within the range of from 0.1 to 5% by weight.

The rubber blends which can be vulcanized with the sulfur/soap vulcanization system, in the presence of at least one polyether of the above specified type, are constituted by:

(a) from 20 to 90% (preferably from 40 to 80%) by weight, of a chloroacrylic rubber,

(b) from 0.5 to 7% and, preferably, from 2 to 5%, by weight, of a polyether having the structural formula (I),

(c) from 20 to 60% by weight of at least one filler, such as: carbon black, alumina, silica, antimony trioxide, ferrites, barium sulfate, calcium carbonate, plaster of Paris, kaolins, magnesium carbonate, graphite,

(d) from 0.1 to 10% by weight of at least one salt of a fatty acid (either saturated or unsaturated, containing from 7 to 30 carbon atoms); preferred among them are alkali-metal and ammonium salts of 2-ethylhexanoic acid, stearic acid, oleic acid, ricinoleic acid, n-octanoic acid,

(e) from 0.01 to 2% (preferably from 0.05 to 1%) by weight, of elemental sulfur,

(f) up to 2% by weight of stabilizer and antioxidizer agents as commonly used in rubber field,

(g) possibly, a fatty acid, preferably stearic acid, as a process co-adjuvant,

(h) possibly, as additive and/or reinforcer agents, polymeric fillers of polyolefinic type, such as: polyethylene, polypropylene, and polyfluoroethylene.

The so constituted rubber blends display vulcanization rates which are considerably higher than those displayed by the corresponding compounds not containing the vulcanization co-adjuvant system (values of Ts2 and T5; see Table No. 3), while simultaneously retaining at all similar elastical-mechanical properties to the latter (Table No. 4). Thus, the vulcanization times result to be considerably shorter, with the vulcanized manufactured articles production cycle length being considerably reduced.

A further advantage accomplished by using the vulcanization co-adjuvants having the structural formula (I) within the scope of sulfur/soap process, is the possibility of metering the accelerating effect of (I), by suitably selecting both the structural type (i.e., the type of aromatic group, the chain length, the molecular weight of the co-adjuvant), and the concentration thereof.

Illustrative, non-limitative examples of the systems claimed in the present invention are reported in the following.

In order to enable the same examples to be better understood, a brief description of the tables reported at present text end, is anticipated now.

Table No. 1 reports the amounts of the individual components which constitute the base rubber blend of Examples 1-7 (except for the polyether compound, which is reported in Table No. 2).

Table No. 2 reports the type and amount of polyether compound having the general formula (I) added to the base rubber blend of Table No. 1 before vulcanization.

Table No. 3 summarizes the scorch and rheometric data relevant to the prepared systems. Both MV and ML values display the absence of any appreciable plasticizer effects, except for Examples 2 and 7, in which the polyoxyethylenic chains contain more than 10 oxyethylenic units. The values of T5 and Ts2 are indicative of the different vulcanization rates.

Table No. 4 reports the mechanical properties of the several polymers.

Example Nos. 2, 3, 4 and 6 display high vulcanization rates as compared to Reference Example 1. The lack of plasticizer effect in Example Nos. 3, 4, 5 and 6 is confirmed by the values of modulus, tensile strength and hardness, respectively, which are substantially the same as of the base compound.

## EXAMPLE No. 1

The rubber is fed to an open mixer of roller type, with the temperature of the rollers being of 47±5 °C, the free air gap between the rollers being of 1.7 mm and the roller revolution speeds of being of 24 and respectively 36 revolutions per minute; and the rubber is blended for 1 minute. Then, a half of the total amount of the remaining components (previously pre-mixed), except for sulfur, is added. The components and the amounts of the components which constitute the rubber blend are reported in Table No. 1.

After 1-minute blending, the residual portion of the blend of the components is added (except for sulfur). The rubber blend is processed for a further 2-minute time. The free air gap is adjusted at 2.1 mm, and a cut of the rubber blend is performed, with a 2-minute mixing. Then, further cuts are carried out. Sulfur is added and, after dispersion thereof, 15 further cuts are carried out within 2 minutes. The free air gap between the rollers of the mixer is then increased up to 2.8 mm, and cuts are carried out during the residual 2 minutes. The rubber blend is conditioned at 25 °C and 50% R.H. (Relative Atmosphere Humidity) before the vulcanization process.

The vulcanization conditions used are: thermoforming in press at 166 °C, under a pressure of 80 bars, for 15 minutes (2 mm thick slabs), or 20 minutes (12.5 mm thick slabs). All specimens were submitted to a further heat treatment in an oven at 150 °C for 16 hours.

The rheometric characteristics were evaluated at 166 °C for 60 minutes (ASTM D 2084); the scorching ability was evaluated at 121 °C (ASTM D 1646) (Table No. 3). The vulcanized product was evaluated by measuring the hardness (ASTM D 2240), and the tensile properties thereof (ASTM D 412) (Table No. 4).

EXAMPLE No. 2

By the same modalities as reported in Example No. 1, the specimen having the composition specified in Table Nos. 1 and 2 was prepared and evaluated. The rheometric and physical-mechanical characteristics are reported in Table Nos. 3 and 4, respectively.

EXAMPLE No. 3

By the same modalities as reported in Example No. 1, the specimen having the composition specified in Table Nos. 1 and 2 was prepared and evaluated. The rheometric and physical-mechanical characteristics are reported in Table Nos. 3 and 4, respectively.

EXAMPLE No. 4

By the same modalities as reported in Example No. 1, the specimen having the composition specified in Table Nos. 1 and 2 was prepared and evaluated. The rheometric and physical-mechanical characteristics are reported in Table Nos. 3 and 4, respectively.

EXAMPLE No. 5

By the same modalities as reported in Example No. 1, the specimen having the composition specified in Table Nos. 1 and 2 was prepared and evaluated. The rheometric and physical-mechanical characteristics are reported in Table Nos. 3 and 4, respectively.

EXAMPLE No. 6

By the same modalities as reported in Example No. 1, the specimen having the composition specified in Table Nos. 1 and 2 was prepared and evaluated. The rheometric and physical-mechanical characteristics are reported in Table Nos. 3 and 4, respectively.

EXAMPLE No. 7

By the same modalities as reported in Example No. 1, the specimen having the composition specified in Table Nos. 1 and 2 was prepared and evaluated. The rheometric and physical-mechanical characteristics are reported in Table Nos. 3 and 4, respectively.

Table No. 1

| Base Components | Weight (g) | Parts by weight, based on 100 parts of polymer |
|---|---|---|
| Cyanacryl R | 300 | 100 |
| Carbon black N 550 | 180 | 60 |
| Stearic acid | 6 | 2 |
| Gamma Anox | 6 | 2 |
| NPS Red Oll Soap | 10.5 | 3.5 |
| NBS sulfur | 0.9 | 0.3 |

* Cyanacryl R is a chloroacrylic rubber,
* Gamma Anox is an antioxidant,
* NPS red oil is standard sodium oleate,
* NBS sulfur is standard elemental sulfur, wherein "NBS" means "National Bureau of Standards"

Table No. 2

| Ex. (No.) | Vulcanization co-adjuvant (type) | Weight (g) | Parts by weight, based on 100 parts of polymer |
|---|---|---|---|
| 1 | --- | -- | -- |
| 2 | $C_9H_{19}$-Ø-O(-$C_2H_4$O-)$_{15}$-H | 15 | 5 |
| 3 | Ø-O-$CH_2$-$CH_2$-OH | 0.46 | 0.78 |
| 4 | Ø-O-$CH_2$-$CH_2$-OH | 0.92 | 1.56 |
| 5 | $C_9H_{19}$-Ø-O(-$C_2H_4$O-)$_4$-H | 6.8 | 2.3 |
| 6 | $C_9H_{19}$-Ø-O(-$C_2H_4$O-)$_9$-H | 10.5 | 3.5 |
| 7 | $C_9H_{19}$-Ø-O($CH_2$-$CH_2$-O)$_{30}$-H | 5.0 | 8.8 |

Table No. 3

| | Scorch | | | Rheometric properties | | | | |
|---|---|---|---|---|---|---|---|---|
| Ex. | MV | T5 | T35 | ML | MH | Ts2 | T50 | T90 |
| (No.) | MV | (min.) | (min.) | (lb*in) | | (min.) | (min.) | (min.) |
| 1 | 55 | 15.5 | 35.5 | 6.9 | 27.5 | 5.3 | 14.9 | 35.5 |

Table No. 3

(Continued)

| Ex. | | Scorch | | Rheometric properties | | | | |
|---|---|---|---|---|---|---|---|---|
| | | T5 | T35 | ML | MH | Ts2 | T50 | T90 |
| (No.) | MV | (min.) | (min.) | (lb*in) | | (min.) | (min.) | (min.) |
| 2 | 48 | 5.7 | 10 | 6.2 | 26.9 | 2.4 | 5.3 | 17.5 |
| 3 | 50 | 15.5 | 36.0 | 6.0 | 25.2 | 3.8 | 8.8 | 23.0 |
| 4 | 46 | 15.5 | 36.4 | 5.8 | 24.5 | 3.8 | 8.8 | 23.0 |
| 5 | 55 | 10.5 | 22.7 | 8.8 | 28.0 | 4.0 | 10.2 | 25.9 |
| 6 | 55 | 8.5 | 17.2 | 7.9 | 30.4 | 3.1 | 8.5 | 24.0 |
| 7 | 47 | 4.5 | 7.0 | 7.5 | 28.5 | 1.9 | 3.8 | 13.5 |

MV is Mooney viscosity,

T5 and T35 are the times after which an increase in Mooney viscosity of 5 and, respectively, 35 viscosity units took place,

ML is minimal viscosity value,

MH is maximal viscosity value,

Ts2 is the time after which a viscosity increase of 2 lb*in over ML took place,

T5 and T90 are the time periods after which 50% and 90% of viscosity change (MH—ML) takes place, respectively.

Table No.4

| Example (No.) | MECHANICAL PROPERTIES | | |
|---|---|---|---|
| | MODULUS 100% (MPa) | TENSILE STRENGTH (MPa) | SHORE HARDNESS (Hardness units) |
| 1 | 7.0 | 13.0 | 73 |
| 2 | 6.0 | 12.0 | 70 |
| 3 | 7.0 | 13.0 | 73 |
| 4 | 6.5 | 12.8 | 73 |
| 5 | 7.0 | 13.0 | 72 |
| 6 | 7.0 | 13.0 | 73 |
| 7 | 5.3 | 11.5 | 67 |

## Claims

1. Use, as accelerating agents in the vulcanization reaction of sulfur/soap type of chloroacrylic rubber-based compounds, of polyethers of polyoxyethylenic type corresponding to the following general formula

   $R\text{-}O\text{-}(CH_2\text{-}CH_2\text{-}O)_nR'$ (I)

   wherein

   R corresponds to:
   an aryl or alkylaryl group in which the alkyl substituent, which may be either linear or branched, contains from 1 to 10 carbon atoms,

   R' corresponds to:
   a methyl; ethyl; propyl; benzyl; or alkylbenzyl group in which the alkyl substituent is of from 1 to 10 carbon atoms; an aryl or alkylaryl group in which the alkyl substituent is of from 1 to 10 carbon atoms; a hydrogen atom,

   n is an integer comprised within the range of from 1 to 10.

2. Use of polyethers of polyoxyethylenic type according to Claim 1, in which the polyethers, corresponding to general formula (I), have a weight molecular weight lower than 1000.

3. Use of polyethers of polyoxyethylenic type according to Claim 1, in which the polyethers, corresponding to general formula (I), are ethers of nonyl-phenol with polyoxyethylene containing from 1 to 10 oxyethylenic units.

4. Use of polyethers of polyoxyethylenic type according to Claim 1, in which the polyethers, corresponding to general formula (I), are esters of benzoic acid with polyoxyethylene containing from 1 to 10 oxyethylenic units.

5. Use of polyethers of polyoxyethylenic type according to Claim 1, in which the polyethers, corresponding to general formula (I), are esters of naphthoic or alkylnaphthoic acid with polyoxyethylene.

6. Use of polyethers of polyoxyethylenic type according to Claim 1, in which the polyethers, corresponding to general formula (I), are contained in the rubber blends to be vulcanized, in amounts comprised within the range of from 0.5 to 7% by weight.

European Patent Office

# EUROPEAN SEARCH REPORT

Application Number
EP 93 20 2807

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| | No relevant documents disclosed<br>----- | | C08K5/06<br>C08L33/06 |
| | | | **TECHNICAL FIELDS SEARCHED (Int.Cl.5)** |
| | | | C08K<br>C08L |

The present search report has been drawn up for all claims

| Place of search | Date of completion of the search | Examiner |
|---|---|---|
| THE HAGUE | 10 January 1994 | Schueler, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)